# EUROPEAN PATENT SPECIFICATION

(11) **EP 1 219 976 B1**
(45) Date of publication and mention of the grant of the patent: **26.10.2005**
(21) Application number: 01110426.2
(22) Date of filing: 27.04.2001
(51) Int. Cl.: G01V 3/10, G08B 13/24

(54) **Gun detection system**
Waffendetektoranlage
Système de détection d'armes

(30) Priority: 28.12.2000 KR 2000083864
(43) Date of publication of application: 03.07.2002
(73) Proprietor: Bangsan Technologies Inc., Asan-city, Chungcheungnam-do (KR)
(72) Inventor: Kim, Suck Joon, Seocho-ku, Seoul 137-782 (KR); Lee, Dong In, Nowon-ku, Seoul 139-754 (KR)
(74) Representative: TER MEER - STEINMEISTER & PARTNER GbR

(56) References cited:
- EP-A- 0 222 028
- US-A- 3 758 849
- US-A- 4 795 995
- US-A- 5 841 346

## Description

### BACKGROUND OF THE INVENTION

### Field of the Invention

The present invention relates in general to gun detection systems, and more particularly to a gun detection system which is installable in government buildings, airports, banks and the like to detect weapons capable of inflicting injuries on persons, such as guns.

### Description of the Prior Art

Gun detection systems are generally installed in airports, important government buildings and the like to detect guns among visitors' articles so as to more certainly ensure their safety. In some countries, for example, USA, the occurrence of crimes using guns in public places such as supermarkets has rapidly increased, resulting in a keen need for gun detection systems to prevent such crime occurrence.

One such conventional gun detection system is shown in US Patent No. 5,841,346 (US Patent Application No. 09/050,050), filed by this applicant and issued thereto. This gun detection system comprises a gate for generating an electric field around a visitor and receiving an electromagnetic field induced due to a magnetic field effect, and an analyzer/processor unit for analyzing the electromagnetic field received by the gate, determining from the analyzed result whether the visitor carries a gun and notifying a user of the determined result.

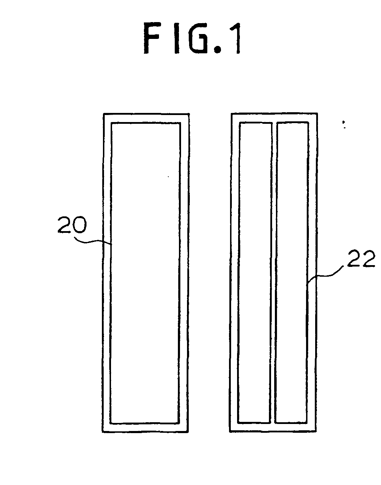

The gate of the above-mentioned conventional gun detection system includes, as shown in Fig. 1, a pair of panels arranged opposite to each other at the entrance/exit of a specific place. One panel has a power line 20 arranged along its edge for generating a magnetic force to generate an electromagnetic field (magnetic field). This power line 20 is embedded in the corresponding panel such that it is not visibly exposed. The other panel has a pair of sensing lines 22 for receiving the magnetic field generated by the opposite panel to sense the magnetic force therefrom. These sensing lines 22 are split on the basis of a central partition of the corresponding panel and arranged along the edge of that panel. Similarly to the power line 20, the sensing lines 22 are embedded in the corresponding panel such that they are not visibly exposed.

Typically, the above power line is called a transmission coil and the above sensing lines are called reception coils. It is common that the transmission coil and the reception coils are arranged apart from each other such that the transmission coil generates the electromagnetic field and the reception coils receive the electromagnetic field generated by the transmission coil and senses its scattering resulting from the presence of a metallic material of a gun when a person carrying such a gun passes through the gate.

However, in the above-mentioned gun detection system, the electromagnetic field generated by the transmission coil must have such a considerable intensity as to be transmitted to the reception coils, resulting in the formation of a dead zone around the boundary between a transmission area and a reception area. This dead zone is an area where the electromagnetic field generated by the transmission coil is not sensed by the reception coils, as well as not scattered by metallic materials.

Further, in the above-mentioned gun detection system, the electromagnetic field generated by the transmission coil unconditionally reacts to metallic materials of cellular phones, keys, pocket computers, portable cassettes and the like that persons often carry, and security personnel must thus often check whether the reacting metallic materials belong to guns. Furthermore, provided that innocent persons carry metallic bodies of the same volumes as those of guns, they will be suspected because of the misrecognition of the metallic bodies as the guns. Moreover, the electromagnetic field generated by the transmission coil may not react to materials of guns, thereby making it impossible to prevent the occurrence of crimes using the guns.

### SUMMARY OF THE INVENTION

Therefore, the present invention has been made in view of the above problems, and it is an object of the present invention to provide a gun detection system which is capable of eliminating dead zones by sensing areas to more certainly detect guns of persons passing through a gate.

In accordance with the present invention, the above and other objects can be accomplished by the provision of a gun detection system comprising a detection gate having first and second panels arranged opposite to each other for defining a sensing space therebetween, the first and second panels detecting scattered electromagnetic fields and generating first and second sense signals having a phase difference therebetween in accordance with the detected results, respectively; oscillation means for applying first and second transmission signals with opposite phases to the first and second panels to induce the first and second panels to generate electromagnetic fields; reception means for receiving the first and second sense signals from the first and second panels and amplifying the received sense signals by a predetermined gain; comparison means for comparing the first and second sense signals received and amplified by the reception means with the first and second transmission signals from the oscillation means, respectively, for determination as to whether a sensed material is metal; a microcomputer for analyzing comparison data from the comparison means according to a gun analysis algorithm and determining on the basis of the analyzed result whether the sensed material belongs to a gun; and indication means for providing at least one of aural and visual indications of the result determined by the microcomputer to a user.

The gun detection system further comprises amplification means connected between the comparison means and the microcomputer for amplifying the comparison data from the comparison means by a predetermined gain such that it is recognizable by the microcomputer.

Preferably, the indication means may include an alarm unit for providing the aural indication of the result determined by the microcomputer to the user; and a display unit for providing the visual indication of the result determined by the microcomputer to the user.

Preferably, a touch pad may be connected to the microcomputer for inputting data regarding metals and guns to be detected from the user; and the microcomputer may include a memory for storing the gun analysis algorithm and electromagnetic field data relating to metals and their amounts of all types of existing guns, the microcomputer being adapted to, according to the gun analysis algorithm stored in the memory, compare the comparison data from the comparison means with the electromagnetic field data stored in the memory and determine the type and size of a gun in accordance with the compared result.

Preferably, the first and second panels each may include a pair of transmission coils arranged in a predetermined area of each panel, the transmission coils being applied respectively with the first and second transmission signals from the oscillation means, the first and second transmission signals being opposite to each other in flow direction and phase such that the transmission coils generate an electromagnetic field in one direction; a pair of auxiliary transmission coils arranged inside the transmission coils and spaced apart therefrom at a predetermined distance for defining a differential space with the transmission coils and performing the same function as that of the transmission coils; a reception coil arranged inside the auxiliary transmission coils and adjacent thereto for receiving the electromagnetic fields generated by the transmission coils and auxiliary transmission coils and electromagnetic fields scattered by a gun; and a pair of zero point adjusters formed inside and adjacent to the reception coil and spaced apart from each other for inducing the reception coil to receive the electromagnetic fields generated by the transmission coils and auxiliary transmission coils, each of the zero pointer adjusters having an internal space whose width is determined according to a width of the differential space. More preferably, the first and second panels each may further include a pair of aluminum interrupters attached to their both sides for preventing external scattered electromagnetic fields from entering the sensing space.

Preferably, the transmission coils in each of the first and second panels may emit the electromagnetic field concentratedly toward the other panel at the moment that the first and second transmission signals cross each other, the first and second transmission signals being certain frequency signals having opposite phases.

### BRIEF DESCRIPTION OF THE DRAWINGS

The above and other objects, features and advantages of the present invention will be more clearly understood from the following detailed description taken in conjunction with the accompanying drawings, in which:
Fig. 1 is a view showing the structure of a gate in a conventional gun detection system;
Fig. 2 is a perspective view showing the structure of a detection gate in a gun detection system in accordance with the present invention;
Fig. 3 is a detailed diagram of the detection gate in Fig. 2; and
Fig. 4 is a block diagram showing the construction of the gun detection system in accordance with the present invention.

### DETAILED DESCRIPTION OF THE PREFERRED EMBODIMENTS

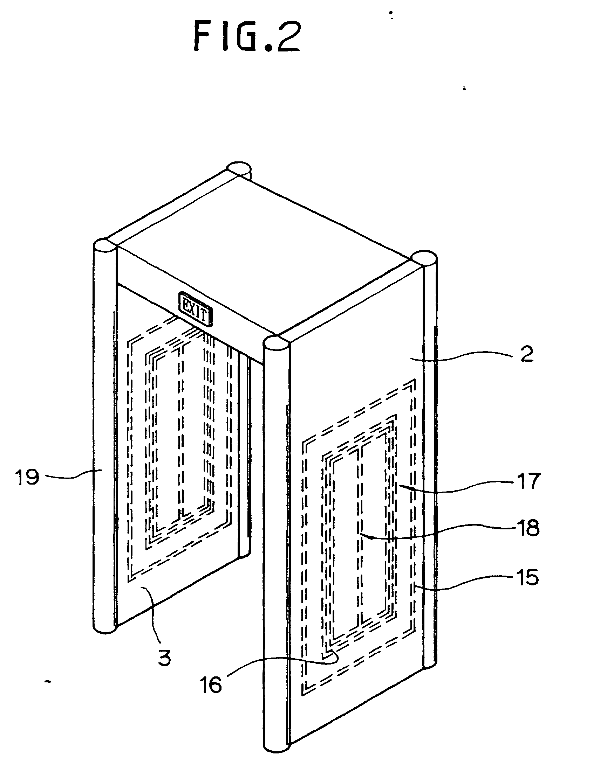

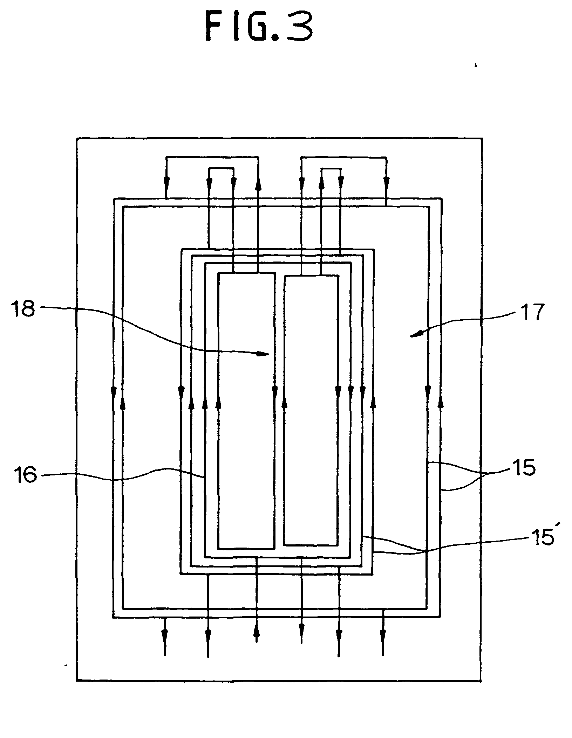

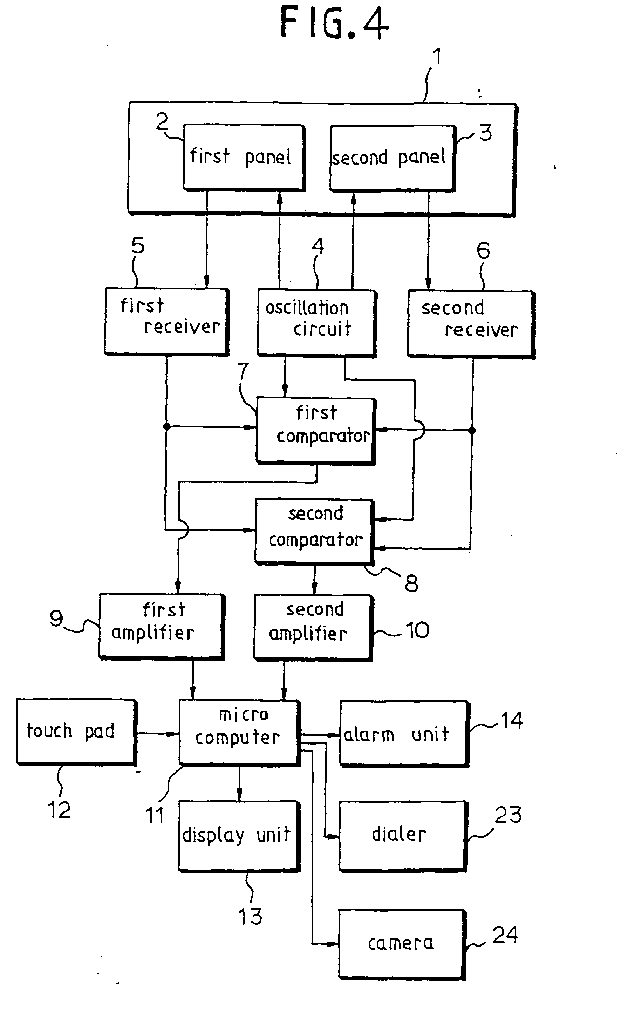

Fig. 2 is a perspective view showing the structure of a detection gate in a gun detection system in accordance with the present invention, Fig. 3 is a detailed diagram of the detection gate in Fig. 2, and Fig. 4 is a block diagram showing the construction of the gun detection system in accordance with the present invention.

As shown in Figs. 2 and 3, the gate 1 has a pair of panels 2 and 3 arranged opposite to each other, each of which includes transmission coils 15, auxiliary transmission coils 15', a reception coil 16, a differential space 17, zero point adjusters 18 and aluminum interrupters 19, embedded therein.

At least one pair of transmission coils 15 are arranged in a predetermined area of each panel (along the edge of each panel) in a wound manner. These transmission coils 15 are applied respectively with a pair of transmission signals, which are opposite to each other in flow direction and phase such that the transmission coils 15 generate an electromagnetic field in one direction. The electromagnetic field is rotated around the transmission signals and then emitted in one direction at the moment that the transmission signals cross each other. At this time, the emitted electromagnetic field has an intensity amplified by twice that under the condition that it is rotated. As a result, the transmission coils 15 emit the electromagnetic field concentratedly toward a sensing space defined between the panels 2 and 3. Therefore, no electromagnetic field is emitted toward other areas than the sensing space such that there is no signal scattering resulting from interferences from other installations.

At least one pair of auxiliary transmission coils 15' are arranged inside the transmission coils 15 and spaced apart therefrom at a predetermined distance to perform the same function as that of the transmission coils 15.

The differential space 17 is defined by the predetermined distance between the transmission coils 15 and the auxiliary transmission coils 15' to secure an area for the generation of electromagnetic fields therebetween. This differential space 17 acts to attenuate an interference between the electromagnetic fields generated by the transmission coils 15 and auxiliary transmission coils 15' at maximum and prevent distortions of the generated electromagnetic fields. Also, the differential space 17 is determined within a range depending on the intensities of the electromagnetic fields generated by the transmission coils 15 and auxiliary transmission coils 15'.

The reception coil 16 is arranged inside the auxiliary transmission coils 15' and adjacent thereto to receive the electromagnetic fields generated by the transmission coils 15 and auxiliary transmission coils 15' and electromagnetic fields scattered by a gun. This scattering is an electronic reaction of the generated electromagnetic fields to a metallic material of a gun when a person carrying the gun passes through the sensing space between the panels 2 and 3. The scattered electromagnetic fields have electromagnetic waves of shapes and intensities which differ according to the kind of metallic materials. For example, on the basis of the shapes and intensities of electromagnetic waves, determinations may be made as to whether a metallic material belongs to a gun and whether it is iron. In particular, the shapes and intensities of electromagnetic waves may be processed into data for use in calculation of the volume of a metallic material object.

A pair of zero point adjusters 18 are formed inside and adjacent to the reception coil 16 and spaced apart from each other. Each of the zero pointer adjusters 18 has an internal space whose width is determined according to the width of the differential space 17 for the more accurate detection of the scattered electromagnetic fields without distortions of electromagnetic waves. The internal space of each of the zero point adjusters 18 preferably has a width proportional to that of the differential space 17 such that the reception coil 16 receives the scattered electromagnetic fields stably without an interference therebetween.

A pair of aluminum interrupters 19 are attached to both sides of each of the panels 2 and 3 to interrupt external eddy electromagnetic fields. For example, provided that there is a metallic body around the panels 2 and 3, a scattered electromagnetic field generated therefrom may be sensed. In this case, the scattered electromagnetic field is generally considerably low in intensity. Each of the aluminum interrupters 19 preferably has a predetermined reference value higher than the intensities of electromagnetic fields scattered by external metallic materials. In this regard, the electromagnetic field scattered by the metallic body around the panels 2 and 3 is not received by the reception coil 16. As a result, because electromagnetic fields scattered by external metallic materials, whose intensities are lower than the predetermined reference value of the aluminum interrupters 19, are interrupted, the present product is installable in the vicinity of any metallic gate frames, which opposes a common idea that no products are installable in the vicinity of metallic gate frames.

In the preferred embodiment of the present invention, the gun detection system comprises, as shown in Fig. 4, a detection gate 1 installed at the entrance/exit of a specific place. The detection gate 1 includes first and second panels 2 and 3 arranged opposite to each other for defining a sensing space therebetween. The first and second panels 2 and 3 are adapted to detect scattered electromagnetic fields and generate first and second sense signals having a phase difference therebetween in accordance with the detected results, respectively. An oscillation circuit 4 is provided to apply first and second transmission signals with opposite phases to transmission coils 15 in each of the first and second panels 2 to induce the transmission coils 15 to generate electromagnetic fields. A reception circuit is provided to receive the first and second sense signals from the first and second panels 2 and 3 and amplify the received sense signals by a predetermined gain. The gun detection system further comprises a comparison circuit for comparing the first and second sense signals received and amplified by the reception circuit with the first and second transmission signals from the oscillation circuit 4, respectively, and an amplification circuit for amplifying comparison data from the comparison circuit by a predetermined gain. The gun detection system further comprises a microcomputer 11, touch pad 12 and indication unit. The reception circuit includes a first receiver 5 for receiving and amplifying the first sense signal from the first panel 2, and a second receiver 6 for receiving and amplifying the second sense signal from the second panel 3.

The comparison circuit functions to compare the amplified sense signals from the reception circuit with the transmission signals from the oscillation circuit 4 for determinations as to whether a sensed material is metal and whether it is iron. To this end, the comparison circuit includes a first comparator 7 for comparing the amplified first sense signal from the reception circuit with the first transmission signal from the oscillation circuit 4 for the determination as to whether the sensed material is metal, and a second comparator 8 for comparing the amplified second sense signal from the reception circuit with the second transmission signal from the oscillation circuit 4 for the determination as to whether the sensed material is iron. The amplification circuit includes a first amplifier 9 for amplifying output data from the first comparator 7, and a second amplifier 10 for amplifying output data from the second comparator 8.

The microcomputer 11 is adapted to analyze the comparison data from the comparison circuit, amplified by the amplification circuit, according to a gun analysis algorithm, compare the analyzed data with pre-stored gun data and determine on the basis of the compared result whether the sensed material belongs to a gun. The microcomputer 11 preferably contains a memory (not shown) for storing electromagnetic field data relating to metals and their amounts of all types of existing guns. This memory also stores the above gun analysis algorithm, which compares the comparison data from the comparison circuit with the electromagnetic field data stored in the memory and determines the type and size of a gun in accordance with the compared result. The touch pad 12 is connected to the microcomputer 11 to input data regarding metals and guns to be detected from a user.

The indication unit acts to provide an aural or visual indication of the result determined by the microcomputer 11 to the user. To this end, the indication unit includes a display unit 13 for providing the visual indication of the result determined by the microcomputer 11 to the user, an alarm unit 14 for providing the aural indication of the result determined by the microcomputer 11 to the user, an automatic dialer 23 for automatically dialing a preset telephone number to connect the result determined by the microcomputer 11 to the preset telephone number, and a camera 24 for shooting a person carrying a gun under control of the microcomputer 11.

The camera, alarm unit and display unit act such that a person carrying a gun recognizes that his or her gun has been detected while passing through the entrance/exit of a specific place and such that other persons in the specific place recognize that the person who currently enters the specific place carries the gun. Further, the camera, alarm unit and display unit may induce an accomplice or accomplices inside or outside the specific place to abandon a crime. Moreover, these camera, alarm unit and display unit may inform persons outside the specific place of the occurrence of a crime inside the specific place. The display unit may preferably be installed over a counter of a store or in the entrance/exit of the store. In this case, the display unit may be installed together with a signboard displaying a message "Gun detection system is in operation in our store". The microcomputer outputs a control signal for an automatic dialing operation to the automatic dialer 23, which, in turn, automatically dials a preset telephone number of a police station or security company. This makes it possible to reduce the amount of time required for the moving in of the police when a crime occurs. In this case, a waiting-calling function may be set in order to enable a dialing operation for central office switching or calling.

### Example 1) 9 + (waiting about 3 or 4 seconds) + designated telephone number

### Example 2) designated telephone number + (waiting about 3 or 4 seconds) + designated telephone number

In order to ensure a call connection, a "recall attempt function" is surely performed when the line is busy. A "next-dialing" function for sequentially dialing input telephone numbers may also be carried out.

In the gun detection system of the present invention, as described above, the transmission coils 15 and reception coil 16 are formed in each of the two panels 2 and 3 to define a sensing space between the panels 2 and 3 where no dead zone for sensing is present. Further, no electromagnetic field is emitted toward other areas than the sensing space such that there is no signal scattering resulting from interferences from other installations, thereby further improving a sensing accuracy of the sensing space.

The comparators 7 and 8 compare sense signals received from the detection gate with transmission signals, respectively. If the sense signals are the same in level as the transmission signals, the comparators 7 and 8 generate signals indicative of the fact that no metal is sensed. In the case where the sense signals are not the same in level as the transmission signals, the first comparator 7 generates comparison data indicative of the fact that a sensed material is metal. In response to the comparison data from the first comparator 7, the microcomputer 11 analyzes the type of the metal and an article comprising the metal. Further, the second comparator 8 generates comparison data indicative of the fact that the sensed material is iron. In response to the comparison data from the second comparator 8, the microcomputer 11 analyzes the type and volume of the iron and, in turn, the type of a gun on the basis of the analyzed iron type and volume.

After accurately analyzing the type of a gun carried by a person who passes through the detection gate, the microcomputer 11 controls the alarm unit 14 and display unit 13 to aurally and visually inform the user that the person passing through the detection gate carries the gun of the analyzed type.

As apparent from the above description, the present invention provides a gun detection system which is capable of eliminating dead zones by sensing areas to more certainly detect guns of persons passing through a gate, thereby more certainly ensuring the safety of persons in airports, important government buildings, banks and the like. Further, the present gun detection system can make a more accurate distinction between gun metals and non-gun metals. This has the effect of protecting general persons with no gun.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A gun detection system comprising:
- a detection gate having first and second panels (2, 3) arranged opposite to each other, each of which includes at least one pair of transmission coils (15) and a reception coil (16), said first and second panels (2, 3) define a sensing space therebetween and are adapted to detect scattered electromagnetic fields and to generate first and second sense signals having a phase difference therebetween in accordance with the detected results, respectively;
- oscillation means (4) for respectively applying first and second transmission signals with opposite phases to said at least one pair of transmission coils (15) in each of said first and second panels (2, 3) to induce said at least one pair of transmission coils (15) in each of said first and second panels (2, 3) to generate electromagnetic fields;
- reception means (5, 6) for receiving said first and second sense signals from said first and second panels (2, 3) and amplifying the received sense signals by a predetermined gain;
- comparison means (7, 8) for comparing said first and second sense signals received and amplified by said reception means (5, 6) with said first and second transmission signals from said oscillation means (7), respectively, for determination as to whether a sense material is metal;
- a microcomputer (11) for analyzing comparison data from said comparison means (7, 8) according to a gun analysis algorithm and determining on the basis of the analyzed result whether the sense material belongs to a gun; and
- indication means (13, 14) providing at least one of aural and visual indications of the result determined by said microcomputer (11) to a user.

2. A gun detection system as set forth in Claim 1, further comprising:
- amplification means (9, 10) connected between said comparison means (7, 8) and said microcomputer (11) for amplifying said comparison data from said comparison means (7, 8) by a predetermined gain such that it is recognizable by said microcomputer (11); and
- a touch pad (12) connected to said microcomputer (11) for inputting data regarding metals and guns to be detected from the user.

3. A gun detection system as set forth in Claim 1, wherein said indication means (13, 14) includes:
- an alarm unit (14) for providing said aural indication of the result determined by said microcomputer (11) to the user;
- a display unit (13) for providing said visual indication of the result determined by said microcomputer to the user;
- an automatic dialer (23) for automatically dialing a preset telephone number to connect the result determined by said microcomputer (11) to the preset telephone number; and
- a camera (24) for shooting a person carrying a gun under control of said microcomputer (11).

4. A gun detection system as set forth in Claim 2, wherein said microcomputer (11) includes a memory for storing said gun analysis algorithm and electromagnetic field data relating to metals and their amounts of all types of existing guns, said microcomputer (11) being adapted to, according to said gun analysis algorithm stored in said memory, compare said comparison data from said comparison means (7, 8) with said electromagnetic field data stored in said memory and determine the type and size of a gun in accordance with the compared result.

5. A gun detection system as set forth in Claim 1, wherein said reception means (5, 6) includes:
- a first receiver (5) for receiving and amplifying said first sense signal from said first panel (2); and
- a second receiver (6) for receiving and amplifying said second sense signal from said second panel (3).

6. A gun detection system as set forth in Claim 1, wherein said comparison means (7, 8) includes:
- a first comparator (7) for comparing said first sense signal received and amplified by said reception means (5, 6) with said first transmission signal from said oscillation means (4) for determination as to whether the sensed material is metal; and
- a second comparator (8) for comparing said second sense signal received and amplified by said reception means with said second transmission signal from said oscillation means (4) for determination as to whether the sensed material is iron.

7. A gun detection system as set forth in Claim 1, wherein said first and second panels (2, 3) each include:
- said pair of transmission coils (15) arranged in a predetermined area of each panel, said transmission coils (15) being applied respectively with said first and second transmission signals from said oscillation means (4), said first and second transmission signals being opposite to each other in flow direction and phase such that said transmission coils (15) generate an electromagnetic field in one direction;
- a pair of auxiliary transmission coils (15') arranged inside said transmission coils (15) and spaced apart therefrom at a predetermined distance for defining a differential space (17) with said transmission coils (15) and performing the same function as that of said transmission coils (15);
- said reception coil (16) arranged inside said auxiliary transmission coils (15') and adjacent thereto for receiving said electromagnetic fields generated by said transmission coils (15) and auxiliary transmission coils (15') and electromagnetic fields scattered by a gun; and
- a pair of zero point adjusters (18) formed inside and adjacent to said reception coil (16) and spaced apart from each other for inducing said reception coil (16) to receive said electromagnetic fields generated by said transmission coils and auxiliary transmission coils (15'), each of said zero pointer adjusters (18) having an internal space whose width is determined according to a width of said differential space (17).

8. A gun detection system as set forth in Claim 7, wherein said transmission coils (15) in each of said first and second panels (2, 3) are adapted to emit said electromagnetic field concentratedly toward the other panel at the moment that said first and second transmission signals cross each other, said first and second transmission signals being certain frequency signals having opposite phases.

9. A gun detection system as set forth in Claim 7, wherein said first and second panels (2, 3) each further include a pair of aluminum interrupters (19) attached to their both sides for preventing external scattered electromagnetic fields from entering said sensing space.

## Patentansprüche

1. Schusswaffen-Erfassungssystem, das umfasst:
- ein Erfassungstor mit einer ersten und einer zweiten Platte (2, 3), die einander gegenüber angeordnet sind und wovon jede wenigstens ein Paar Sendespulen (15) und eine Empfangsspule (16) enthält, wobei die erste und die zweite Platte (2, 3) zwischen sich einen Erfassungsraum definieren und so beschaffen sind, dass sie gestreute elektromagnetische Felder erfassen und ein erstes und ein zweites Erfassungssignal erzeugen, die gemäß den Erfassungsergebnissen zwischen sich eine Phasendifferenz besitzen;
- Oszillationsmittel (4), die an das wenigstens eine Paar Sendespulen (15) in jeder der ersten und zweiten Platten (2, 3) ein erstes bzw. ein zweites Sendesignal mit entgegengesetzten Phasen anlegen, um das wenigstens eine Paar Sendespulen (15) zu veranlassen, in jeder der ersten und zweiten Platten (2, 3) elektromagnetische Felder zu erzeugen;
- Empfangsmittel (5, 6), die das erste und das zweite Erfassungssignal von der ersten bzw. der zweiten Platte (2, 3) empfangen und die empfangenen Erfassungssignale mit einem vorgegebenen Verstärkungsfaktor verstärken;
- Vergleichsmittel (7, 8), die das erste und das zweite Erfassungssignal, die von den Empfangsmitteln (5, 6) empfangen und verstärkt werden, mit den ersten bzw. den zweiten Sendesignalen von den Oszillationsmitteln (7) vergleichen, um festzustellen, ob ein erfasstes Material Metall ist;
- einen Mikrocomputer (11), der die Vergleichsdaten von den Vergleichsmitteln (7, 8) in Übereinstimmung mit einem Schusswaffen-Analysealgorithmus analysiert und anhand des Analyseergebnisses feststellt, ob das erfasste Material zu einer Schusswaffe gehört; und
- Angabemittel (13, 14), die für einen Anwender eine hörbare und/oder sichtbare Angabe des durch den Mikrocomputer (11) bestimmten Ergebnisses bereitstellen.

2. Schusswaffen-Erfassungssystem nach Anspruch 1, das ferner umfasst:
- Verstärkungsmittel (9, 10), die zwischen die Vergleichsmittel (7, 8) und den Mikrocomputer (11) geschaltet sind, um die Vergleichsdaten von den Vergleichsmitteln (7, 8) mit einem vorgegebenen Verstärkungsfaktor zu verstärken, so dass sie von dem Mikrocomputer (11) erkannt werden können; und
- ein Berührungsfeld (12), das mit dem Mikrocomputer (11) verbunden ist, um Daten bezüglich Metallen und Schusswaffen, die von dem Anwender erfasst werden sollen, einzugeben.

3. Schusswaffen-Erfassungssystem nach Anspruch 1, bei dem die Angabemittel (13, 14) umfassen:
- eine Alarmeinheit (14), die die hörbare Angabe des durch den Mikrocomputer (11) bestimmten Ergebnisses für den Anwender bereitstellt;
- eine Anzeigeeinheit (13), die die sichtbare Angabe des durch den Mikrocomputer bestimmten Ergebnisses für den Anwender bereitstellt;
- eine automatische Wähleinrichtung (23), die eine im Voraus festgelegte Telephonnummer automatisch wählt, um das durch den Mikrocomputer (11) bestimmte Ergebnis mit der im Voraus festgelegten Telephonnummer zu verbinden; und
- eine Kamera (24), um eine Person, die eine Schusswaffe trägt, unter der Steuerung des Mikrocomputers (11) aufzunehmen.

4. Schusswaffen-Erfassungssystem nach Anspruch 2, bei dem der Mikrocomputer (11) einen Speicher enthält, um den Schusswaffen-Analysealgorithmus und Daten bezüglich elektromagnetischer Felder, die mit Metallen und deren Mengen in sämtlichen Typen vorhandener Schusswaffen in Beziehung stehen, speichert, wobei der Mikrocomputer (11) so beschaffen ist, dass er in Übereinstimmung mit dem in dem Speicher gespeicherten Schusswaffen-Analysealgorithmus die Vergleichsdaten von den Vergleichsmitteln (7, 8) mit den Daten elektromagnetischer Felder, die in dem Speicher gespeichert sind, vergleicht und den Typ und die Größe einer Schusswaffe in Übereinstimmung mit dem Vergleichsergebnis bestimmt.

5. Schusswaffen-Erfassungssystem nach Anspruch 1, bei dem die Empfangsmittel (5, 6) umfassen:
- einen ersten Empfänger (5), der das erste Erfassungssignal von der ersten Platte (2) empfängt und verstärkt; und
- einen zweiten Empfänger (6), der das zweite Erfassungssignal von der zweiten Platte (3) empfängt und verstärkt.

6. Schusswaffen-Erfassungssystem nach Anspruch 1, bei dem die Vergleichsmittel (7, 8) umfassen:
- einen ersten Komparator (7), der das von den Empfangsmitteln (5, 6) empfangene und verstärkte erste Erfassungssignal mit dem ersten Sendesignal von den Oszillationsmitteln (4) vergleicht, um festzustellen, ob das erfasste Material Metall ist; und
- einen zweiten Komparator (8), der das von den Empfangsmitteln empfangene und verstärkte zweite Erfassungssignal mit dem zweiten Sendesignal von den Oszillationsmitteln (4) vergleicht, um festzustellen, ob das erfasste Material Eisen ist.

7. Schusswaffen-Erfassungssystem nach Anspruch 1, bei dem die erste und die zweite Platte (2, 3) jeweils umfassen:
- das Paar Sendespulen (15), die in einem vorgegebenen Bereich jeder Platte angeordnet sind, wobei die Sendespulen (15) mit dem ersten bzw. dem zweiten Sendesignal von den Oszillationsmitteln (4) beaufschlagt werden, wobei das erste und das zweite Sendesignal eine entgegengesetzte Ausbreitungsrichtung und eine entgegengesetzte Phase haben, so dass die Sendespulen (15) ein elektromagnetisches Feld in einer Richtung erzeugen;
- ein Paar Hilfssendespulen (15'), die in den Sendespulen (15) angeordnet und voneinander um eine vorgegebene Strecke beabstandet sind, um in den Sendespulen (15) einen differentiellen Raum (17) zu definieren und um die gleiche Funktion wie die Sendespulen (15) auszuführen;
- die Empfangsspule (16), die innerhalb der Hilfssendespulen (15') und angrenzend an diese angeordnet ist, um die elektromagnetischen Felder, die durch die Sendespulen (15) und die Hilfssendespulen (15') erzeugt werden, und die durch eine Schusswaffe gestreuten elektromagnetischen Felder zu empfangen; und
- ein Paar Nullpunkt-Einstelleinrichtungen (18), die innerhalb der und angrenzend an die Empfangsspule (16) und in gegenseitigem Abstand ausgebildet sind, um die Empfangsspule (16) dazu zu veranlassen, die durch die Sendespulen und die Hilfssendespulen (15') erzeugten elektromagnetischen Felder zu empfangen, wobei jede der Nullpunkt-Einstelleinrichtungen (18) einen Innenraum besitzt, dessen Weite in Übereinstimmung mit der Weite des differentiellen Raums (17) bestimmt ist.

8. Schusswaffen-Erfassungssystem nach Anspruch 7, bei dem die Sendespulen (15) in jeder der ersten und zweiten Platten (2, 3) so beschaffen sind, dass sie das elektromagnetische Feld zu dem Zeitpunkt, zu dem sich das erste und das zweite Sendesignal kreuzen, konzentriert zu der anderen Platte aussenden, wobei das erste und das zweite Sendesignal Signale mit bestimmter Frequenz und entgegengesetzten Phasen sind.

9. Schusswaffen-Erfassungssystem nach Anspruch 7, bei dem die erste und die zweite Platte (2, 3) ferner jeweils ein Paar Aluminiumunterbrecher (19) umfassen, die an ihren beiden Seiten befestigt sind, um zu verhindern, dass äußere gestreute elektromagnetische Felder in den Erfassungsraum eintreten.

## Revendications

1. Système de détection d'arme comprenant :
- une porte de détection ayant un premier et un second panneaux (2, 3) arrangés à l'opposé l'un de l'autre, chacun desquels comprend au moins une paire de bobines d'émission (15) et une bobine de réception (16), lesdits premier et second panneaux (2, 3) définissent entre eux un espace de captage et sont adaptés pour détecter des champs électromagnétiques diffusés et pour générer des premier et second signaux de captage ayant entre eux une différence de phase en accord avec les résultats détectés, respectivement :
- un moyen d'oscillation (4) pour appliquer respectivement les premiers et second signaux d'émission avec les phases opposées à ladite au moins une paire de bobines d'émission (15) dans chacun desdits premier et second panneaux (2, 3) pour induire ladite au moins une paire de bobines d'émission (15) dans chacun desdits premier et second panneaux (2, 3) pour générer des champs électromagnétiques ;
- un moyen de réception (5, 6) pour recevoir lesdits premier et second signaux de captage depuis lesdits premier et second panneaux (2, 3) et amplifiant les signaux de captage reçus au moyen d'un gain prédéterminé ;
- un moyen de comparaison (7, 8) pour comparer lesdits premier et second signaux de captage reçus et amplifiés au moyen dudit moyen de réception (5, 6) avec lesdits premier et second signaux d'émission provenant dudit moyen d'oscillation (7), respectivement, pour déterminer si un matériau capté est un métal ;
- un micro-ordinateur (11) pour analyser les données de comparaison provenant dudit moyen de comparaison (7, 8) en accord avec un algorithme d'analyse d'arme et déterminer sur la base du résultat analysé si le matériau capté appartient à une arme ; et
- un moyen d'indication (13, 14) fournissant au moins une des indications auditive et visuelle du résultat déterminé au moyen dudit microordinateur (11) à un utilisateur.

2. Système de détection d'arme selon la revendication 1, comprenant de plus :
- un moyen d'amplification (9, 10) connecté entre ledit moyen de comparaison (7, 8) et ledit microordinateur (11) pour amplifier lesdites données de comparaison provenant dudit moyen de comparaison (7, 8) d'un facteur de gain prédéterminé de telle façon qu'il soit reconnaissable au moyen de microordinateur (11) ; et
- un bloc à effleurement (12) connecté audit microordinateur (11) pour entrer les données concernant les métaux et les armes à détecter par l'utilisateur.

3. Système de détection d'arme selon la revendication 1, dans lequel ledit moyen d'indication (13, 14) comprend :
- une unité d'alarme (14) pour fournir ladite indication auditive du résultat déterminé au moyen dudit microordinateur (11) à l'utilisateur ;
- une unité d'affichage (13) pour fournir ladite indication visuelle du résultat déterminé par ledit microordinateur à l'utilisateur ;
- un composeur automatique (23) pour composer automatiquement un numéro de téléphone préétabli pour connecter le résultat déterminé au moyen dudit microordinateur (11) au numéro de téléphone préétabli ; et
- une caméra (24) pour photographier une personne portant une arme, sous la commande dudit microordinateur (11).

4. Système de détection d'arme selon la revendication 2, dans lequel ledit microordinateur (11) comprend une mémoire pour stocker ledit algorithme d'analyse d'arme et les données de champ électromagnétique en rapport avec les métaux et leurs quantités de tous types d'armes existantes, ledit microordinateur (11) étant adapté pour, en accord avec ledit algorithme d'analyse d'arme stocké dans ladite mémoire, comparer lesdites données de comparaison provenant dudit moyen de comparaison (7, 8) avec lesdites données de champ électromagnétique stockées dans ladite mémoire et déterminer le type et la taille d'une arme en accord avec le résultat comparé.

5. Système de détection d'arme selon la revendication 1, dans lequel ledit moyen de réception (5, 6) comprend :
- un premier récepteur (5) pour recevoir et amplifier ledit premier signal de captage provenant dudit premier panneau (2) ; et
- un second récepteur (6) pour recevoir et amplifier ledit second signal de captage provenant dudit second panneau (3).

6. Système de détection d'arme selon la revendication 1, dans lequel ledit moyen de comparaison (7, 8) comprend :
- un premier comparateur (7) pour comparer ledit premier signal de captage reçu et amplifié par ledit moyen de réception (5, 6) avec ledit premier signal d'émission provenant dudit moyen d'oscillation (4) pour déterminer si le matériau capté est métallique ; et
- un second comparateur (8) pour comparer ledit second signal de captage reçu et amplifié par ledit moyen de réception avec ledit second signal d'émission provenant dudit moyen d'oscillation (4) pour déterminer si le matériau capté est l'acier.

7. Système de détection d'arme selon la revendication 1, dans lequel lesdits premier et second panneaux (2, 3) comprennent chacun :
- ladite paire de bobines d'émission (15) arrangées dans une zone prédéterminée de chaque panneau, lesdites bobines d'émission (15) étant appliquées respectivement avec lesdits premier et second signaux d'émission depuis ledit moyen d'oscillation (4), lesdits premier et second signaux d'émission étant opposés l'un par rapport à l'autre en direction de flux et de phase de telle façon que lesdites bobines d'émission (15) génèrent un champ électromagnétique dans une direction ;
- une paire de bobines d'émission auxiliaires (15') arrangées à l'intérieur desdites bobines d'émission (15) et espacées l'une de l'autre par rapport à ces dernières d'une distance prédéterminée pour définir un espace différentiel (17) avec lesdites bobines d'émission (15) ;
- ladite bobine de réception (16) arrangée à l'intérieur desdites bobines d'émission auxiliaires (15') et qui y sont adjacentes pour recevoir lesdits champs électromagnétiques générés par lesdites bobines d'émission (15) et les bobines d'émission auxiliaires (15') et les champs électromagnétiques dispersés par une arme ; et
- une paire d'ajusteurs à zéro (18) formés à l'intérieur et adjacents à ladite bobine de réception (16) et espacés l'un de l'autre pour induire ladite bobine de réception (16) pour recevoir lesdits champs électromagnétiques générés par lesdites bobines d'émission et les bobines d'émission auxiliaires (15'), chacun desdits ajusteurs de tarage à zéro (18) ayant un espace interne dont la largeur est déterminée en accord avec une largeur dudit espace différentiel (17).

8. Système de détection d'arme selon la revendication 7, dans lequel lesdites bobines d'émission (15) dans chacun desdits premier et second panneaux (2, 3) sont adaptées pour émettre ledit champ électromagnétique de façon concentrée vers l'autre panneau au moment où lesdits premier et second signaux d'émission se croisent l'un et l'autre, lesdits premier et second signaux d'émission étant des signaux d'une certaine fréquence ayant des phases opposées.

9. Système de détection d'arme selon la revendication 7, dans lequel lesdits premier et second panneaux (2, 3) comprennent de plus chacun une paire d'interrupteurs en aluminium (19) attachés sur leurs deux côtés pour empêcher les champs électromagnétiques dispersés externes d'entrer dans ledit espace de captage.
